# EUROPÄISCHE PATENTSCHRIFT

(11) **EP 1 984 181 B1**
(45) Veröffentlichungstag und Bekanntmachung des Hinweises auf die Patenterteilung: **11.04.2018**
(21) Anmeldenummer: 07703344.7
(22) Anmeldetag: 08.02.2007
(51) Int. Cl.: B41F 13/008, F16D 1/096

(54) **FORMZYLINDERANKOPPLUNG**
PRINTING CYLINDER COUPLING
COUPLAGE DE CYLINDRE GRAVÉ

(30) Priorität: 08.02.2006 DE 102006006008
(43) Veröffentlichungstag der Anmeldung: 29.10.2008
(73) Patentinhaber: Windmöller & Hölscher KG, 49525 Lengerich (DE)
(72) Erfinder: LÜBKE, Herbert, 49536 Lienen (DE); SCHRÖDER, Volker, 49549 Ladbergen (DE); BRINKMANN, Clemens, 49196 Bad Laer (DE)
(74) Vertreter: Schneider, Bernd
(86) Internationale Anmeldenummer: PCT/EP2007/001067
(87) Internationale Veröffentlichungsnummer: WO 2007/090638

(56) Entgegenhaltungen:
- DE-A1- 4 214 210
- DE-A1- 4 301 374
- DE-A1- 10 329 429
- DE-A1- 10 353 634
- DE-A1- 19 836 259
- DE-C1- 3 804 673
- DE-U1- 9 410 726
- FR-A- 1 131 519
- GB-A- 750 826
- GB-A- 2 063 422
- US-A- 2 946 611
- US-A- 4 425 816
- US-A- 5 672 026
- US-A1- 2003 106 445

## Beschreibung

Die Erfindung betrifft ein Druckwerk in einer Rotationsdruckmaschine nach dem Oberbegriff des Patentanspruchs 1 sowie ein Verfahren nach dem Oberbegriff des Patentanspruch 15.

In einem Druckwerk einer Rotationsdruckmaschine ist es häufig notwendig, Zylinder, insbesondere Druckzylinder, auszutauschen. Vor allem in Tiefdruckmaschinen, in denen Zylinder - die so genannten Formzylinder - verwendet werden, in deren Oberfläche das Druckbild eingraviert ist, müssen diese Zylinder bei einem Motiv- und/oder Formatwechsel ausgetauscht werden. Da der Antrieb für einen solchen Zylinder in der Regel in dem Druckwerk verbleibt, ist es notwendig, den Zylinder vom Antrieb zu lösen. Ein Antrieb eines solchen Druckwerks kann ein eigener, dem betreffenden Zylinder zugeordneter Antriebsmotor, in der Regel ein Elektromotor, sein, aber auch eine von einem mehrere Zylinder antreibenden Antrieb abzweigende Welle. Im Folgenden wird daher von einer Antriebswelle die Rede sein, welche das für die Drehung des Zylinders notwendige Drehmoment bereitstellt.

Für den Antrieb des Zylinders durch den Antriebszapfen ist eine lösbare, aber drehfeste Verbindung notwendig. In der Vergangenheit wurden zahlreiche Kupplungen bekannt, die diese Aufgabe lösen. So umfasst die Wellenkupplung, welche in der Patentanmeldung EP 0 713 023 A1 dargestellt ist, eine Antriebswelle, die mittels Übertragungsmittel das Drehmoment vollständig auf einen stirnseitigen Zapfen des Zylinders übertragbar ist. Der Zapfen des Zylinders ist mit einem Bolzen durchsetzt, der in einen am Ende der Antriebswelle vorgesehenen Zentrierausschnitt einschiebbar ist. Um eine sichere Verbindung herzustellen, ist der Bolzen mittels eines Schieberinges im Zentrierausschnitt festlegbar.

Auch die DE 103 53 634 A1 und die DE 103 29 429 A1 offenbaren Antriebsverbindungen zwischen einem Antriebsbauteil und dem Zapfen eines Druckwerkzylinders.

Die Druckschriften DE 38 04 673 C1, US 5 672 026, GB 750 826 und DE 198 36 259 A1, die allesamt keine Druckmaschine zeigen, offenbaren Möglichkeiten, wie eine drehfeste Antriebsverbindung zwischen einem Antriebsbauteil und einem Zapfen hergestellt werden kann, wobei Schrägflächen vorhanden sind, deren relative Verschiebung zueinander zum Verspannen eines Bauteils auf dem Zapfen führt. Diese Verschiebung erfolgt jedoch aufgrund einer manuellen Betätigung oder durch eine hydraulische Betätigung.

Nachteilig ist bei dieser Anordnung jedoch, dass der Zapfen des Zylinders mit einem Bolzen versehen sein muss, um ein Kuppeln zu ermöglichen. Das Vorsehen eines Bolzens bedeutet einen höheren Vorbereitungsaufwand für den Zylinder bzw. eine eingeschränkte Einsatzmöglichkeit des Zylinders, der häufig auch in andere Vorrichtungen, beispielsweise in Reinigungsvorrichtungen, eingespannt werden muss.

Daher ist es die Aufgabe der Erfindung, ein Druckwerk vorzuschlagen, welches die genannten Nachteile vermeidet.

Die Aufgabe wird gelöst durch ein Druckwerk nach dem Oberbegriff des Anspruchs 1, welches zusätzlich die Merkmale des kennzeichnenden Teils des Anspruchs 1 umfasst.

In einem solcherart ausgestalteten Druckwerk kann beispielsweise ein Zylinder drehfest über Übertragungsmittel mit einer Antriebswelle verbunden werden, wobei der Zylinder einen Zapfen umfasst, der im wesentlichen rotationssymmetrisch ist. Besondere Bauteile oder Maßnahmen für eine formschlüssige Verbindung sind nicht vorzusehen beziehungsweise nicht zu treffen, da die Verbindung auf Basis eines Reibschlusses funktioniert.

Erfindungsgemäß weisen die Übertragungsmittel zumindest ein Verbindungs- und zumindest ein Gegenstück auf, wobei zumindest eines dieser Stücke, also entweder das Verbindungsstück oder das Gegenstück oder sogar alle diese Stücke, eine Schrägfläche umfasst. Das jeweils andere Stück umfasst eine oder mehrere Kanten oder Flächen, die mit der Schrägfläche des einen Stücks in Kontakt stehen. Weiterhin umfasst die Erfindung Mittel zum relativen Verschieben des Verbindungsstücks und des Gegenstücks. Durch das relative Verschieben wird über die Schrägfläche eine - je nach Verschiebungsrichtung zunehmende oder abnehmende - Kraft auf das Verbindungsstück und das Gegenstück ausgeübt. Je nachdem, welches dieser Stücke elastischer ist, wird sich dieses Stück in seinen Dimensionen verändern. Bei rotationssymmetrischen Stücken wird sich also der Außen- oder der Innendurchmesser verändern. Auf diese Weise ist es möglich, zwischen dem Verbindungsstück, welches beispielsweise mit der Antriebswelle fest verbunden ist, und dem Zylinder eine reibschlüssige Verbindung herzustellen. Dazu weist beispielsweise das Verbindungsstück eine Schrägfläche auf, welche durch die Verschiebung eine Kraft auf das Gegenstück ausübt, welches den Zylinder umgreift. Durch die Kraft ist das Gegenstück gegenüber seinen ursprünglichen Dimensionen verkleinert, so dass es auf den Zylinder aufgeklemmt ist und so das auf ihn übertragene Drehmoment auf den Zylinder übertragen kann. Mit Hilfe der beschriebenen Elemente kann auf eine bestimme Ausgestaltung des Zylinders mittels Stiften oder anderen Elementen, über die das Drehmoment übertragen wird, verzichtet werden. Die erfindungsgemäße Lösung zeichnet sich weiterhin durch die geringe Anzahl von Elementen und deren Einfachheit aus, so dass diese Lösung kostengünstiger herzustellen ist. Die genannten Mittel zum Verschieben können unterschiedlicher Ausprägung sein. So ist beispielsweise eine Spanneinrichtung denkbar.

Um ein relatives Verdrehen des in die Hülse und/oder Gegenstück und in das Verbindungsstück eingebrachten Gewindes auf einfache Weise zu erreichen, ist weiterhin vorgesehen, eines der beiden Stücke festzuhalten, während das andere Stück gedreht wird. Wenn beispielsweise das Verbindungsstück fest mit der Antriebswelle verbunden ist, bietet es sich an, das Gegenstück, die Welle und/oder die Hülse so zu fixieren, dass eine Rotation verhindert wird. Um dieses zu erreichen, weist in einer vorteilhaften Ausführungsform das Gegenstück und/oder die Hülse eine Vertiefung auf, in die ein Arretierstift eingreifen kann. Dabei ist die Vertiefung ein in axialer Richtung verlaufendes Langloch, wodurch einerseits die axiale Bewegung des Gegenstücks ermöglicht wird, andererseits aber auch der Arretierstift zum Zwecke des Eingreifvorgangs nicht genau positioniert sein muss. In einer anderen vorteilhaften Ausführungsform der Erfindung kann anstelle einer Vertiefung auch eine Erhöhung, etwa ein Anschlag vorgesehen sein, gegen den der Arretierstift stößt, wenn die Hülse relativ zu dem Arretierstift verdreht wird. Dabei muss der Arretierstift nicht dauerhaft mit einer Kraft beaufschlagt werden, damit dieser in das Sackloch hineinrutscht. Bei Verwendung eines Anschlages wird vermieden, dass bei relativ schneller Drehung der Hülse der Arretierstift nicht in das Sackloch hineinrutscht, sondern dieses überspringt. Auf diese Weise ist es möglich, den Drehimpuls, mit dem das System beaufschlagt wurde, zu verwenden, um eine stärkere Reibschlussverbindung zwischen Verbindungsstück und Gegenstück zu erzeugen. Die Massenträgheit wird also als eine Kraftkomponente verwendet, um die Gewinde der Hülse und des Verbindungsstück etwas weiter zu verschrauben als es ohne Ausnutzung des Massenträgheitsmoments möglich wäre. Diese Vorgehensweise ist insbesondere dann von Vorteil, wenn das mit dem Antrieb aufbringbare Drehmoment für eine ausreichend kraftschlüssige Verbindung nicht ausreicht. Sowohl Sackloch als auch Anschlag umfassen eine Wandung, gegen die der Arretierstift letztendlich stößt, um das Weiterdrehen der Hülse zu verhindern. Selbstverständlich sind auch andere Ausgestaltungen, die eine entsprechende Wandung umfassen, denkbar, etwa eine Vertiefung mit einer radial verlaufenden Wandung, wobei die Vertiefung eine Schräge umfasst, auf der der Arretierstift gleiten kann. Hierbei würde ebenfalls sichergestellt, dass sich der Arretierstift an die Wandung anlegt.

In einer bevorzugten Ausführungsform der Erfindung weist das zweite der genannten Stücke eine zu der ersten Schrägfläche komplementäre Schrägfläche auf, wodurch eine bessere Kraftverteilung erreicht und damit ein erhöhter Verschleiß oder gar die Beschädigung der Stücke vermieden wird.

Vorteilhaft ist es, wenn das Verbindungsstück, von seinem dem Gegenstück zugewandten Ende ausgehend, eine eine Schrägfläche umfassende Sacklochbohrung umfasst. Diese Sacklochbohrung ist demnach durch einen mit zunehmender Tiefe veränderten Durchmesser charakterisiert. Aus fertigungstechnischen Gründen wird dabei in der Regel ein mit zunehmender Tiefe verkleinerter Durchmesser vorgesehen.

Weiterhin ist es vorteilhaft, wenn das Gegenstück ein ringförmiges Element umfasst, welches an seiner Außenoberfläche eine Schrägfläche umfasst, also beispielsweise konusförmig ausgebildet ist. Dabei ist das Ende des Gegenstücks mit dem kleineren Umfang dem Verbindungsstück zugewandt, so dass das Gegenstück in die Sacklochbohrung des Verbindungsstücks eingeschoben werden kann.

In einer vorteilhaften Ausführungsform der Erfindung ist das Gegenstück in Umfangsrichtung in Segmente unterteilt. Diese Unterteilung kann auf einfache Weise dadurch erreicht werden, dass von dem im Durchmesser kleineren Ende des Gegenstücks ausgehende Einschnitte eingebracht werden. Auf diese Weise wird dem Gegenstück eine erhöhte Elastizität verliehen, wodurch der Innendurchmesser mit geringerem Kraftaufwand verkleinert werden kann. Es kann allerdings auch in einer anderen Ausführungsform der Erfindung vorgesehen sein, den Innen- oder Außenumfang des Verbindungsstückes zu variieren. In diesem Fall ist das Verbindungsstück in Umfangsrichtung in Segmente zu unterteilen.

Eine besonders bevorzugte Ausgestaltung der Erfindung beinhaltet Gewinde als Mittel zum relativen Verschieben des Verbindungsstücks und des Gegenstücks. Jedes der beteiligten Stücke ist dabei mit einem Bauteil mit einem Gewinde verbunden, so dass durch das Verdrehen beider Bauteile zueinander eine Verschiebung erfolgt.

In einer bevorzugten Ausführungsform der Erfindung umfasst das Gegenstück eine Hülse, welche an ihrem Innenumfang ein Gewinde aufweist. Diese Hülse ist beispielsweise durch Abstandhalter auf Abstand zum ringförmigen Element gehalten und kann relativ zu diesem drehbar gelagert sein.

Vorteilhaft ist es dabei, wenn das ringförmige Element von der Hülse koaxial umschlossen wird.

Das Verbindungsstück weist vorteilhafterweise an seiner Außenoberfläche ebenfalls ein Gewinde auf.

Es ist allerdings zu betonen, dass in einer anderen Ausführungsform auch das Verbindungsstück ein Innengewinde und das Gegenstück und/oder die dieses umschließende Hülse ein Außengewinde aufweisen kann. Durch das Vorsehen von Gewinden wird das relative Verschieben auf besonders einfache Weise erreicht.

In einer besonders vorteilhaften Ausführungsform ist der Arretierstift mittels einer Kolbenzylindereinheit bewegbar. Soll also der Arretierstift in das Langloch eingebracht werden, so wird die Kolbenzylindereinheit mit einem Druckmittel, beispielsweise Druckluft, beaufschlagt, so dass der Arretierstift an die Außenoberfläche der Hülse oder des Gegenstücks angelegt wird. Durch Drehung des die Vertiefung aufweisenden Stücks wird der Arretierstift automatisch, wenn die Vertiefung den Arretierstift erreicht, in die Vertiefung eingebracht.

In einer weiteren Ausgestaltung der Erfindung ist der Antriebswelle ein eigener Antriebsmotor zugeordnet. Auf diese Weise kann die Ankopplung des Zylinders an die Antriebswelle unabhängig von der Drehung anderer, in dem Druckwerk vorhandener Zylinder erfolgen. Besonders vorteilhaft ist es dabei, wenn die Drehachse der Antriebswelle und die Drehachse des Rotors des Antriebsmotors im Wesentlichen miteinander fluchten. Da jedoch ein Fluchten dieser beiden Drehachsen nicht immer sichergestellt werden kann, kann es von Vorteil sein, wenn ein verdrehsicheres, aber mit einem gewissen axialen und radialen Spiel versehenes Ausgleichselement zwischen Rotor und Antriebswelle vorgesehen ist. Ein solches Ausgleichselement kann ein Wellenbalg sein. Besonders erwähnenswert ist allerdings, dass ein solches Ausgleichelement eine axiale Verschiebung des Verbindungsstücks relativ zu dem Motor ermöglicht, so dass bei einer axialen Verschiebung des Verbindungsstücks die Nachführung des Motors nicht notwendig ist.

In einer weiteren vorteilhaften Ausgestaltung der Erfindung ist das Verbindungsstück drehbar gelagert. Das das Verbindungsstück lagernde Lager kann sich wiederum auf Bestandteilen des Maschinengestells abstützen. Durch die Lagerung des Verbindungsstücks kann auf ein Lager, welches den Zapfen des Formzylinders lagert, verzichtet werden. Auf diese Weise kann das Vorhalten und/oder das Aufschieben von Lagern auf Zapfen von Formzylindern eingespart werden, so dass es einerseits zu einer Kostenersparnis kommen kann, andererseits ein geringerer Arbeitsaufwand beim Austausch des Formzylinders verursacht wird.

Weitere Ausführungsbeispiele der Erfindung gehen aus der gegenständlichen Beschreibung und den Ansprüchen hervor.
Die einzelnen Figuren zeigen:
- Fig. 1: Ansicht einer Ankopplungsvorrichtung in einem erfindungsgemäßen Druckwerk,
- Fig. 2: Ansicht einer Ankopplungsvorrichtung in einem erfindungsgemäßen Druckwerk,
- Fig. 3: Schnitt III - III aus Fig. 1.
- Fig. 4: Ein weiteres Ausführungsbeispiel der Erfindung

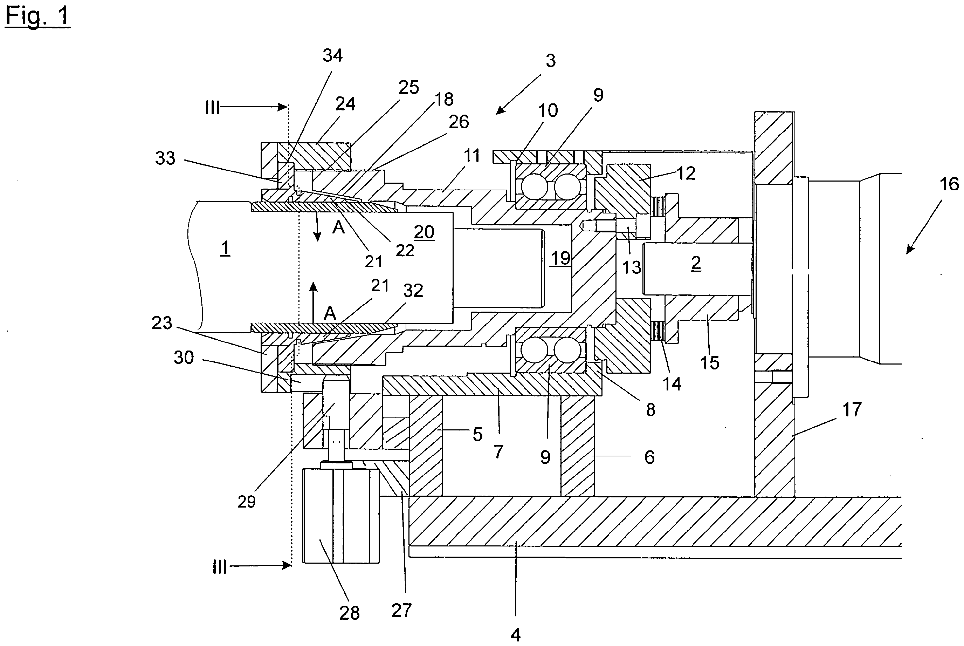

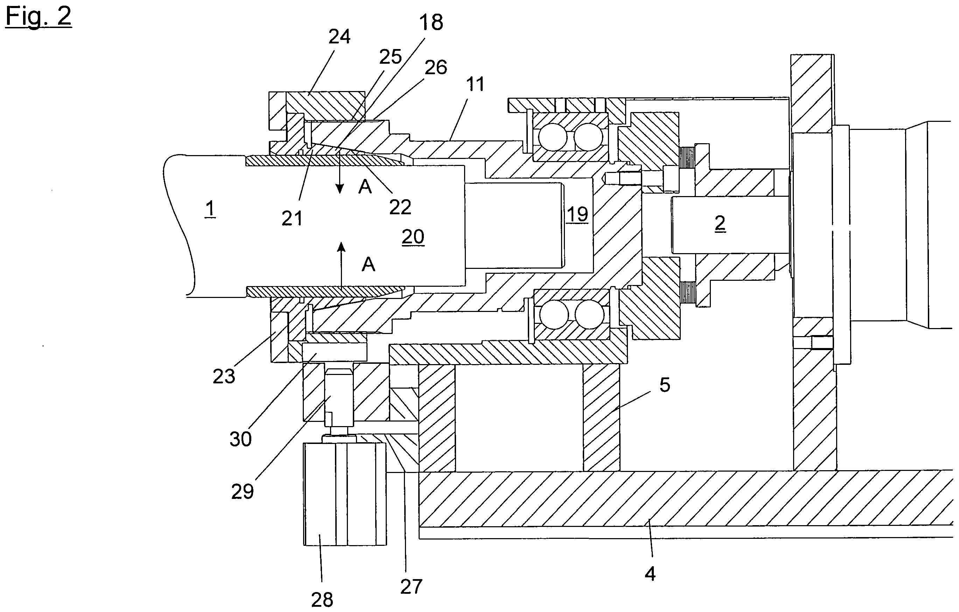

Fig. 1 zeigt eine Ansicht einer Ankopplungsvorrichtung in einem erfindungsgemäßen Druckwerk, bevor eine drehfeste Antriebsverbindung zwischen Zylinder 1, beispielsweise einem Druckzylinder, und Antriebswelle 2 hergestellt worden ist. Die Fig. 2 zeigt die gleiche Ansicht nach Herstellung der drehfesten Verbindung.

Die Ankopplungsvorrichtung 3 ist auf einer Konsole 4 angeordnet, welche Bestandteil des Druckmaschinengestells sein kann und/oder relativ zu dem Druckmaschinengestell verschiebbar sein kann. Auf dieser Konsole 4 sind zwei Stützen 5, 6 befestigt, die eine Buchse 7 tragen, wobei letztere an ihrem dem Zylinder 1 abgewandten Ende einen Anschlag 8 aufweist. An diesem Anschlag 8 liegt ein Lager 9, beispielsweise ein Kugel- oder ein Nadellager, an, welches mit einem Seegering 10 gegen axiales Verrutschen gesichert ist. In dem Lager 9 ist ein Verbindungsstück 11 drehbar gelagert. An dem dem Zylinder 1 abgewandten Ende des Verbindungsstücks 11 ist stirnseitig ein Ring 12 befestigt, beispielsweise mittels einer Schraube 13. Der Ring 12 ist mit einem Wellenbalg 14 verbunden, der eine drehfeste Verbindung zur Anschlussbuchse 15 herstellt. Die Anschlussbuchse 15 ist wiederum drehfest mit der Antriebswelle 2 verbunden. Verbindungsstück 11 und Antriebswelle 2 können aber auch auf eine andere Art miteinander verbunden werden. Wichtig ist jedoch dabei, dass eine drehfeste Verbindung hergestellt wird.

In dem in den Figuren 1 und 2 dargestellten Ausführungsbeispiel wird die Antriebswelle 2 von einem eigenen Antriebsmotor 16 angetrieben, wobei der Rotor des Motors die Antriebswelle 2 direkt, d. h. ohne eine Zwischenschaltung von Getriebestufen antreiben kann. Die Antriebswelle 2 kann aber auch auf andere Arten mit einem Antriebsdrehmoment beaufschlagt werden, beispielsweise von einem Abzweiggetriebe im Zuge einer Königswelle, welche mehreren Zylindern oder anderen Bauteilen einer Druckmaschine gemeinsam das Drehmoment aus einem einzigen Antrieb übermittelt. Im vorliegenden Beispiel ist das Außengehäuse des Antriebsmotors 16, welcher ein Elektromotor sein kann, an einer Tragstütze 17 in üblicher Weise angeflanscht.

Das der Antriebswelle 2 abgewandte Ende des Verbindungsstücks 11 weist eine Sacklochbohrung 19 auf, die an ihrem Anfang eine Schrägfläche 18 aufweist. Diese Schrägfläche 18 ist rotationssymmetrisch und verjüngt sich in Richtung der Sacklochbohrung 19. Die Sacklochbohrung 19 dient der Aufnahme des Zapfens 20 des Zylinders 1, wobei sich Zapfen 20 und Verbindungsstück 11 nicht berühren. Da dennoch das Verbindungsstück 11 zumindest einen Teil des Gewichtes des Zylinders 1 trägt, wie weiter unten deutlich wird, ist das Lager 9, welches das Verbindungsstück 11 drehbar lagert, ausreichend zu dimensionieren.

Der Zapfen 20 ist umschlossen von einem Gegenstück 21, das ringförmig ausgebildet ist. Dieses Gegenstück 21 weist an seinem Außenumfang Schrägflächen 22 auf, ist also konusförmig ausgebildet, wobei das Ende mit dem geringeren Außenumfang dem Verbindungsstück 11 zugewandt ist. Außerhalb der Schrägflächen 22 umfasst das Gegenstück 21 einen ringförmigen Steg 33. Auf der Außenoberfläche des ringförmigen Stegs läuft die Nut 34 oder der Absatz einer Hülse 24. Um das axiale Verschieben der Hülse 24 zu verhindern, ist an dieser stirnseitig ein Zwischenring 23 lösbar befestigt, beispielsweise angeschraubt. An ihrer Innenoberfläche ist die Hülse 24 mit einem Innengewinde 25 versehen, welches mit dem in die Außenoberfläche des Verbindungsstücks 11 eingebrachten Gewinde 26 kämmt.

Über einen Halter 27 ist eine, vorzugsweise druckluftbetätigte, Kolbenzylindereinheit 28 gestellfest an der Stütze 5 befestigt. An der Schubstange der Kolbenzylindereinheit 28 ist ein Arretierstift 29 angeordnet, welcher in - im Wesentlichen - radialer Richtung der Hülse 24 verschiebbar ist. In der Hülse 24 ist ein sich in axialer Richtung der Hülse 24 erstreckendes Langloch 30 eingebracht oder ein Anschlag 35 angeordnet, in oder an welches der Arretierstift 29 einfassen oder angelegt werden kann. Diese Situation ist in Fig. 1 dargestellt.

Zum Ankoppeln eines Zylinders 1 an den Antrieb wird nun wie folgt verfahren: Beim Einbringen des Zylinders 1 wird dessen Zapfen 20 durch die Innenbohrung des Gegenstücks 21, das somit ringförmig ausgebildet ist, hindurch in die Sacklochbohrung 19 des Verbindungsstücks 11 eingeschoben. Das Gewinde 25 der Hülse 24 und das Gewinde 26 des Verbindungsstücks 11 befinden sich dabei vorteilhafterweise bereits im Eingriff. Nun wird die Kolbenzylindereinheit 28 betätigt, so dass sich der Arretierstift 29 in der Regel an die Außenoberfläche der Hülse 24 anlegt, wobei der Arretierstift 29 weiterhin mit einer Kraft beaufschlagt wird. Nur mit geringer Wahrscheinlichkeit greift der Arretierstift 29 direkt in die Sacklochbohrung 30. Nun wird die Antriebswelle gedreht, wodurch auch das Verbindungsstück 11 in Rotation versetzt wird. Dabei kann auch sofort die Hülse 24 mitgenommen werden, so dass nach einem gewissen Drehungswinkel der Arretierstift 29 in das Sackloch 30 rutscht oder an den Anschlag 35 anlegt. Auf diese Weise wird verhindert, dass die Hülse 24 weiter mit dem Verbindungsstück 11 dreht.
Dreht sich die Hülse allerdings nicht mit, so bewegt sich das Verbindungsstück 11 in axialer Richtung relativ zum Gegenstück 21, so dass durch den alsbald auftretenden Reibschluss dieses weiter gemeinsam mit dem Verbindungsstück 11 rotiert, wodurch auch die Hülse 24 in Rotation versetzt wird und wiederum nach einem gewissen Drehwinkel der Arretierstift 29 in das Sackloch 30 rutscht und einer weitere Rotation der Hülse 24 verhindert. Diese Situation ist in Fig. 1 gezeigt. Mit weiterer Rotation schraubt sich nun das Außengewinde 26 des Verbindungsstücks 11 weiter in das Innengewinde 25 der Hülse 24, so dass sich Gegenstück 21 und Verbindungsstück 11 aufeinander zu bewegen. Die Schrägfläche 18 drückt also mit zunehmender Kraft auf die Schrägfläche 22, was zur Folge hat, dass die Schrägfläche 22 aufgrund der geringen Materialstärke des Gegenstücks 21 in radialer Richtung (Kraftpfeil A) nach innen gedrückt wird. Damit wird der Innendurchmesser des Gegenstücks 21 verkleinert, bis die Innenoberfläche mit starker Flächenpressung unter Ausbildung eines Reibschlusses drehfest mit dem Zapfen 20 des Zylinders 1 verbunden ist. Mit anderen Worten: Die Kraft A ist so groß, dass die resultierende Haftreibung der Trägheit des Zylinders 1 (incl. der beim Drucken auftretenden Kräfte) überwiegt. Sobald das System ausreichend verspannt ist, wird die Kolbenzylindereinheit 28 wiederum betätigt, so dass der Arretierstift 29 aus dem Langloch 30 herausgezogen wird. Diese Situation ist in Fig. 2 dargestellt. Der Zylinder 1 kann nun von der Antriebswelle 2 gedreht werden. Das Entfernen eines Zylinders aus dem erfindungsgemäßen Druckwerk erfolgt auf umgekehrtem Wege.

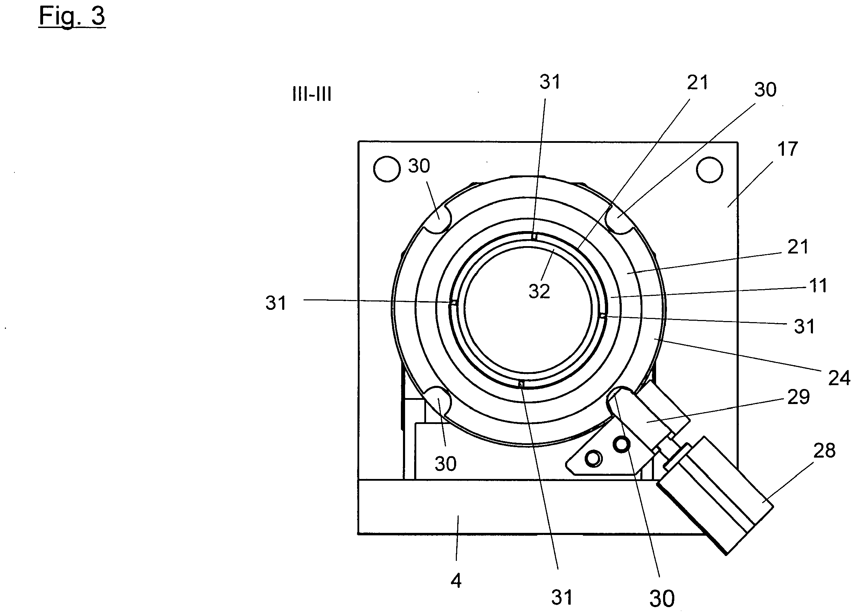

In der Fig. 3 ist der Schnitt III - III der Fig. 1 dargestellt. Gleiche Elemente sind mit den aus den Fig. 1 und 2 bereits bekannten Bezugszeichen versehen. Aus dieser Figur ist zu erkennen, dass über den Umfang der Hülse 24 mehrere, im gezeigten Beispiel vier, Langlöcher vorgesehen sein können, um den Drehwinkel bis zur Arretierung klein zu halten. Weiterhin sind die Schlitze 31 zu erkennen, die in den mit der Schrägfläche 22 versehenen Teil des Gegenstücks 21 in dessen axialer Richtung eingebracht sind, um dessen Nachgiebigkeit bei Krafteinwirkung durch die Schrägfläche 18 des Verbindungsstücks 11 zu erhöhen.

Insgesamt bietet das erfindungsgemäße Druckwerk eine Möglichkeit, einen Zylinder schnell, einfach und nahezu ohne manuellen Eingriff wechseln zu können. Der Zylinder braucht dabei keine angepassten Elemente aufzuweisen. Er muss lediglich einen Zapfen aufweisen, der auf den Innendurchmesser des Gegenstücks 21 abgestimmt ist. Gegebenenfalls kann eine Ausgleichshülse 32 verwendet werden, um die Durchmesser einander anzugleichen.

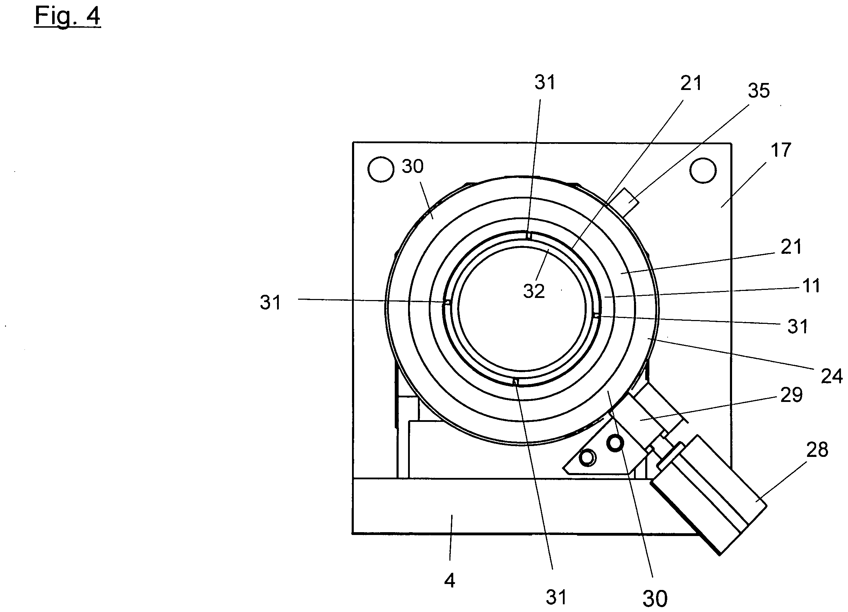

Die Fig. 4 zeigt ein weiteres Ausführungsbeispiel der Erfindung, wobei anstelle der Langlöcher auf dem Außenumfang der Hülse 24 ein Anschlag 35 oder mehrere, vorteilhafterweise zwei, Anschläge angeordnet sind. Wenn die Kolbenzylindereinheit 28 den Arretierstift 29 bewegt, so liegt letzterer an der Außenoberfläche der Hülse 24 an, oder es besteht ein sehr kleiner Abstand. Mit der Drehung der Hülse 24 stößt der Anschlag 35 an den Arretierstift 29, so dass eine weitere Drehung der Hülse 24 verhindert wird. Durch diese Anordnung können Anschlag 35 und Arretierstift 29 auch bei einer großen Relativgeschwindigkeit in Kontakt gebracht werden, ohne dass ein großer Verschleiß auftritt. Um bei Verschleiß einen Austausch des Anschlags 35 und/oder Arretierstifts 29 zu ermöglichen, sind diese lösbar an der Hülse bzw. der Kolbenzylindereinheit angeordnet.

Ist die drehfeste Verbindung zwischen Antrieb und Zylinder 1 hergestellt, so wird der Arretierstift wieder eingezogen, so dass im Druckbetrieb der Anschlag unter dem Arretierstift hindurch gelangen kann.
Sollen Verbindungsstück 11 und Gegenstück 21 voneinander gelöst werden, so wird der Arretierstift erneut ausgefahren und stößt nach weiterer Rotation des Zylinders und damit der Hülse wieder an den Anschlag 35, nur jetzt an der anderen Seite.

| **Bezugszeichenliste** | |
|---|---|
| 1 | Zylinder |
| 2 | Antriebswelle |
| 3 | Ankopplungsvorrichtung |
| 4 | Konsole |
| 5 | Stütze |
| 6 | Stütze |
| 7 | Buchse |
| 8 | Anschlag |
| 9 | Lager |
| 10 | Seegering |
| 11 | Verbindungsstück |
| 12 | Ring |
| 13 | Schraube |
| 14 | Wellenbalg |
| 15 | Anschlussbuchse |
| 16 | Antriebsmotor |
| 17 | Tragstütze |
| 18 | Schrägfläche |
| 19 | Sacklochbohrung |
| 20 | Zapfen |
| 21 | Gegenstück |
| 22 | Schrägfläche |
| 23 | Zwischenring |
| 24 | Hülse |
| 25 | Gewinde der Hülse 24 |
| 26 | Gewinde des Verbindungsstücks |
| 27 | Halter |
| 28 | Kolbenzylindereinheit |
| 29 | Arretierstift |
| 30 | Langloch |
| 31 | Schlitze |
| 32 | Ausgleichshülse |
| 33 | ringförmiger Steg |
| 34 | Nut |
| 35 | Anschlag |
| A | Kraft, die aus der Anlage der Schrägfläche 22 an die Schrägfläche 18 resultiert |

## Patentansprüche

1. Druckwerk einer Rotationsdruckmaschine
- mit zumindest einem Zylinder (1), insbesondere einem Druckzylinder,
- mit einer rotierbaren Antriebswelle (2), durch welche ein Drehmoment bereitstellbar ist, und
- bei dem zwischen Antriebswelle (2) und dem Zylinder (1) Übertragungsmittel (11,18,21,22) vorgesehen, mit welchem Drehmoment von der Antriebswelle (2) auf den Zylinder (1) übertragbar ist und welche vom Zylinder (1) und/oder von der Antriebswelle (1) lösbar sind,
**dadurch gekennzeichnet,**
- **dass** die Übertragungsmittel zumindest ein Verbindungsstück (11) und zumindest ein Gegenstück (21) umfassen, wobei das eine dieser Stücke (11,21), eine Schrägfläche (18,22) umfasst und das andere dieser Stücke (21) Kanten oder Flächen (22,18) umfasst, die mit der Schrägfläche (18,22) in Berührung steht,
- **dass** Mittel (24,25,26) zum relativen Verschieben des Verbindungsstücks (11) und des Gegenstücks (21) zueinander vorgesehen sind, wobei durch das Verschieben die sich berührenden Kanten und/oder Flächen (18,22) mit sich verändernden Kräften (A) beaufschlagbar sind, so dass der Innen- oder Außendurchmesser des Verbindungsstücks (11) oder des Gegenstücks (21) veränderbar sind und
**dass** ein Arretierstift (29) vorgesehen ist, der an eine an dem Gegenstück (21), an dem Verbindungsstück (11) oder an der Hülse angeordneten Wandung anlegbar ist, wobei der Arretierstift (29) mittels einer gestellfesten Kolbenzylindereinheit (28) relativ zu der Wandung bewegbar ist.

2. Druckwerk nach vorstehendem Anspruch,
**dadurch gekennzeichnet, dass**
das zweite der genannten Stücke (21,11) eine zu der Schrägfläche (18) des ersten Stücks komplementäre Schrägfläche (22) umfasst.

3. Druckwerk nach einem der vorstehenden Ansprüche,
**dadurch gekennzeichnet, dass**
das Verbindungsstück (11) von seinem dem Gegenstück (21) zugewandten Ende ausgehende, eine Schrägfläche aufweisende Sacklochbohrung (19) umfasst.

4. Druckwerk nach einem der vorstehenden Ansprüche,
**dadurch gekennzeichnet, dass**
das Gegenstück (21) ein ringförmiges Element (21) umfasst, welches an seiner Außenoberfläche konusförmig ausgebildet ist, um eine Schrägfläche (22) zu umfassen.

5. Druckwerk nach dem vorstehenden Anspruch,
**dadurch gekennzeichnet, dass**
das ringförmige Element (21) in Umfangsrichtung in Segmente unterteilt ist.

6. Druckwerk nach einem der vorstehenden Ansprüche,
**dadurch gekennzeichnet, dass**
die Mittel zum relativen Verschieben des Verbindungsstücks und des Gegenstücks Gewinde (25,26) umfassen.

7. Druckwerk nach einem der vorstehenden Ansprüche,
**dadurch gekennzeichnet, dass**
das Gegenstück (21) eine Hülse (24) umfasst, welche an ihrem Innenumfang ein Gewinde (25) aufweist.

8. Druckwerk nach vorstehendem Anspruch,
**dadurch gekennzeichnet, dass**
die Hülse (25) das ringförmige Element (21) koaxial umschließt.

9. Druckwerk nach einem der vorstehenden Ansprüche,
**dadurch gekennzeichnet, dass**
das Verbindungsstück (11) an seiner Außenoberfläche ein Gewinde (26) aufweist.

10. Druckwerk nach einem der drei vorstehenden Ansprüche,
**dadurch gekennzeichnet, dass**
das Gewinde (26) des Verbindungsstücks (11) und das Gewinde (25) der Hülse (24) in Eingriff miteinander bringbar sind.

11. Druckwerk nach einem der vorstehenden Ansprüche,
**dadurch gekennzeichnet, dass**
die Wandung Bestandteil eines in Axialrichtung verlaufenden Langlochs (30) ist.

12. Druckwerk nach einem der vorstehenden Ansprüche,
**dadurch gekennzeichnet, dass**
die Wandung Bestandteil eines Anschlages (35) ist.

13. Druckwerk nach einem der vorstehenden Ansprüche,
**dadurch gekennzeichnet, dass**
sich das Verbindungsstück (11) mittels eines Lagers (9) drehbar auf Bestandteilen (5, 6, 8) des Maschinengestells (4) abstützt.

14. Druckwerk nach einem der vorstehenden Ansprüche,
**dadurch gekennzeichnet, dass**
sich zumindest ein Zapfen (20) des Zylinders (1) nur über das Verbindungsstück (11) auf zumindest einem Lager (9) abstützt.

15. Verfahren zum drehfesten Verbinden eines Zylinders (1) eines Druckwerks einer Rotationsdruckmaschine mit einer rotierbaren Antriebswelle (2), durch welche ein Drehmoment bereitgestellt wird, wobei die drehfeste Verbindung zwischen Antriebswelle (2) und dem Zylinder (1) mit vom Zylinder (1) und/oder von der Antriebswelle (1) lösbare Übertragungsmittel (11,21,24), mit welchen Drehmoment von Antriebswelle (2) auf den Zylinder (1) übertragen wird, hergestellt wird,
**dadurch gekennzeichnet,**
- **dass** die Übertragungsmittel zumindest ein Verbindungsstück (11) und zumindest ein Gegenstück (21) umfassen, wobei das eine dieser Stücke (11,21) eine Schrägfläche (18,22) umfasst und das andere dieser Stücke (21,11) Kanten oder Flächen (22,18) umfasst, die mit der Schrägfläche (18,22) in Berührung stehen,
- **dass** das Verbindungsstück (11) und das Gegenstück (21) zueinander verschoben werden, wodurch die sich berührenden Kanten und/oder Flächen (18,22) mit sich verändernden Kräften beaufschlagt werden, so dass der Innen- oder Außendurchmesser des Verbindungsstücks (11) oder des Gegenstücks (21) veränderbar sind und
- **dass** ein Arretierstift (29) an eine an dem Gegenstück (21), am dem Verbindungsstück (11) oder an der Hülse angeordneten Wandung angelegt wird, wobei der Arretierstift (29) mittels einer gestellfesten Kolbenzylindereinheit (28) relativ zu der Wandung bewegt wird.

## Claims

1. A printing group of a rotary printing press,
- with at least one cylinder (1), especially a printing cylinder,
- with a rotatable drive shaft (2), by which a torque can be provided, and
- with which transmission means are provided between drive shaft (2) and the cylinder (1), with which torque can be transmitted from the drive shaft (2) to the cylinder (1) and which can be detached from the cylinder (1) and/or from the drive shaft (1), **characterized in**
- **that the** transmission means comprise at least one connection piece (11) and at least one counter-piece (21), wherein the one of said pieces (11, 21) comprises an inclined surface (18, 22) and the other of said pieces (21) comprises edges or surfaces (22, 18), which come into contact with the inclined surface (18, 22),
- **that** means (24, 25, 26) are provided for the relative displacement of the connection piece (11) and the counter-piece (21) towards each other, wherein as a result of the displacement the edges and/or surfaces (18, 22) coming into contact can be subjected to variable forces (A), such that the inner or outer diameter of the connection piece (11) or of the counter-piece (21) can be modified and
- **that** a locking pin (29) is provided, which can be applied to a wall arranged on the counter-piece (21), on the connection piece (11) or on the sleeve, wherein the locking pin (29) can be moved relative to the wall by means of piston cylinder unit (28) fixed to the frame.

2. A printing group according to the preceding claim,
**characterized in that**
the second of the pieces (21, 11) mentioned comprises an inclined surface (22) complementary to the inclined surface (18) of the first piece.

3. A printing group according to any one of the preceding claims,
**characterized in that**
the connection piece (11) comprises blind hole (19) extending from its end facing the counter-piece (21) and having an inclined surface.

4. A printing group according to any one of the preceding claims,
**characterized in that**
the counter-piece (21) comprises an annular element (21), which is formed conically on its outer surface, in order to comprise an inclined surface (22).

5. A printing group according to the preceding claim,
**characterized in that**
the annular element (21) is divided into segments in the circumferential direction.

6. A printing group according to any one of the preceding claims,
**characterized in that**
the means for the relative displacement of the connection piece and the counter-piece comprise threads (25, 26).

7. A printing group according to any one of the preceding claims,
**characterized in that**
the counter-piece (21) comprises a sleeve (24), which has a thread (25) on its inner circumference.

8. A printing group according to the preceding claim,
**characterized in that**
the sleeve (25) coaxially encompasses the annular element (21).

9. A printing group according to any one of the preceding claims,
**characterized in that**
the connection piece (11) has a thread (26) on its outer surface.

10. A printing group according to one of the three preceding claims,
**characterized in that**
the thread (26) of the connection piece (11) and the thread (25) of the sleeve (24) can be brought into engagement with each other.

11. A printing group according to any one of the preceding claims,
**characterized in that**
the wall is a component of an elongated hole (30) extending in the axial direction.

12. A printing group according to any one of the preceding claims,
**characterized in that**
the wall is a component of a stop (35).

13. A printing group according to any one of the preceding claims,
**characterized in that**
the connection piece (11) is rotatably supported by means of a bearing (9) on components (5, 6, 8) of the machine frame (4).

14. A printing group according to any one of the preceding claims,
**characterized in that**
at least one pin (20) of the cylinder (1) is supported only via the connection piece (11) on at least one bearing (9).

15. A method for the torque-proof connection of a cylinder (1) of a printing group of a rotary printing press with a rotatable drive shaft (2), by which a torque is provided, wherein the torque-proof connection between drive shaft (2) and the cylinder (1) is established with transmission means (11, 21, 24) detachable from the cylinder (1) and/or from the drive shaft (1), with which torque is transmitted from the drive shaft (2) to the cylinder (1),
**characterized in**
- **that** the transmission means comprise at least one connection piece (11) and at least one counter-piece (21), wherein the one of these pieces (11, 21) comprises an inclined surface (18, 22) and the other of these pieces (21, 11) comprises edges or surfaces (22, 18), which come into contact with the inclined surface (18, 22),
- **that** the connection piece (11) and the counter-piece (21) are moved towards each other, whereby the edges and/or surfaces (18, 22) coming into contact are subjected to variable forces, so that the inner or outer diameter of the connection piece (11) or the counter-piece are modifiable and
- **that** a locking pin (29) is applied to a wall arranged on the counter-piece (21), on the connection piece (11) or on the sleeve, wherein the locking pin (29) is moved relative to the wall by means of a piston cylinder unit (28) fixed to the frame.

## Revendications

1. Dispositif d'impression d'une machine d'impression rotative,
- avec au moins un cylindre (1), plus particulièrement un cylindre d'impression,
- avec un arbre d'entraînement rotatif (2), qui permet de générer un couple et
- dans lequel, entre l'arbre d'entraînement (2) et le cylindre (1) sont prévus des moyens de transmission (11, 18, 21, 22) avec lesquels un couple peut être transmis de l'arbre d'entraînement (2) au cylindre (1), et qui peuvent être détachés du cylindre (1) et/ou de l'arbre d'entraînement (1),
**caractérisé en ce que**
- les moyens de transmission comprennent au moins une pièce de liaison (11) et au moins une contre-pièce (21), une de ces pièces (11, 21) comprenant une surface inclinée (18, 22) et l'autre de ces pièces (21) comprenant des arêtes ou des surfaces (22, 18) qui sont en contact avec la surface inclinée (18, 22),
- des moyens (24, 25, 26) sont prévus pour le déplacement relatif de la pièce de liaison (11) et de la contre-pièce (21) entre elles, le déplacement permettant d'appliquer aux arêtes et/ou des surfaces en contact (18, 22) des forces variables (A) de façon à ce que le diamètre interne ou le diamètre externe de la pièce de liaison (11) ou de la contre-pièce (21) soit variable et
une goupille de blocage (29) est prévue, qui peut être appuyée contre une paroi disposée au niveau de la contre-pièce (21), de la pièce de liaison (11) ou de la douille, la goupille de blocage (29) pouvant être déplacée par rapport à la paroi au moyen d'une unité piston-cylindre (28) solidaire du châssis.

2. Dispositif d'impression selon la revendication précédente,
**caractérisé en ce que**
la deuxième pièce (21, 11) comprend une surface inclinée (22) complémentaire par rapport à la surface inclinée (18) de la première pièce.

3. Dispositif d'impression selon l'une des revendications précédentes,
**caractérisé en ce que**
la pièce de liaison (11) comprend, à partir de son extrémité orientée vers la contre-pièce (21), un alésage borgne (19) comprenant une surface inclinée.

4. Dispositif d'impression selon l'une des revendications précédentes,
**caractérisé en ce que**
la contre-pièce (21) comprend un élément annulaire (21) qui est réalisé sous une forme conique au niveau de surface extérieure, afin de comprendre une surface inclnée (22).

5. Dispositif d'impression selon la revendication précédente,
**caractérisé en ce que**
l'élément annulaire (21) est divisé en segments dans la direction circonférentielle.

6. Dispositif d'impression selon l'une des revendications précédentes,
**caractérisé en ce que**
les moyens de déplacement relatif de la pièce de liaison et de la contre-pièce comprennent des filetages (25, 26).

7. Dispositif d'impression selon l'une des revendications précédentes,
**caractérisé en ce que**
la contre-pièce (21) comprend une douille (24) qui comprend un filetage (25) au niveau de sa circonférence interne.

8. Dispositif d'impression selon la revendication précédente,
**caractérisé en ce que**
la douille (25) entoure de manière coaxiale l'élément annulaire (21).

9. Dispositif d'impression selon l'une des revendications précédentes,
**caractérisé en ce que**
la pièce de liaison (11) comprend au niveau de sa surface externe un filetage (26).

10. Dispositif d'impression selon l'une des trois revendications précédentes,
**caractérisé en ce que**
le filetage (26) de la pièce de liaison (11) et le filetage (25) de la douille (24) peuvent être emboîtés entre eux.

11. Dispositif d'impression selon l'une des revendications précédentes,
**caractérisé en ce que**
la paroi fait partie d'un trou oblong (30) s'étendant dans la direction axiale.

12. Dispositif d'impression selon l'une des revendications précédentes,
**caractérisé en ce que**
la paroi fait partie d'une butée (35).

13. Dispositif d'impression selon l'une des revendications précédentes,
**caractérisé en ce que**
la pièce de liaison (11) s'appuie au moyen d'un palier (9) de manière rotative contre des composants (5, 6, 8) du châssis de la machine (4).

14. Dispositif d'impression selon l'une des revendications précédentes,
**caractérisé en ce que**
un axe (20) du cylindre (1) s'appuie contre au moins un palier (9) uniquement par l'intermédiaire de la pièce de liaison (11).

15. Procédé de liaison solidaire en rotation d'un cylindre (1) d'un dispositif d'impression d'une machine d'impression rotatives avec un arbre d'entraînement rotatif (2), qui permet de générer un couple, la liaison solidaire en rotation entre l'arbre d'entraînement (2) et le cylindre (1) étant établie avec des moyens de transmission (11, 21, 24) pouvant être détachés du cylindre (1) et/ou de l'arbre d'entraînement (1), qui permettent de transmettre le couple de l'arbre d'entraînement (2) au cylindre (1),
**caractérisé en ce que**
- les moyens de transmission comprennent au moins une pièce de liaison (11) et au moins une contre-pièce (21), l'une de ces pièces (11, 21) comprenant une surface inclinée (18, 22) et l'autre de ces pièces (21, 11) comprenant des arêtes ou des surfaces (22, 18) qui sont en contact avec la surface inclinée (18, 22),
- la pièce de liaison (11) et la contre-pièce (21) sont déplacées l'une par rapport à l'autre, ce qui permet d'appliquer aux arêtes et/ou aux surfaces (18, 22) des forces variables, de façon à ce que le diamètre interne ou le diamètre externe de la pièce de liaison (11) ou de la contre-pièce (21) soit variable et
- une goupille de blocage (29) est appuyée contre une paroi disposée sur la contre-pièce (21), sur la pièce de liaison (11) ou sur la douille, la goupille d'arrêt (29) étant déplacée au moyen d'une unité piston-cylindre (28) solidaire du châssis par rapport à la paroi.
